Europäisches Patentamt

European Patent Office

Office européen des brevets

(19)

(11) **EP 0 636 280 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(51) Int Cl.$^6$: **H01M 8/04**, H01M 8/12, H01M 8/06

(21) Anmeldenummer: **94905657.6**

(22) Anmeldetag: **20.01.1994**

(86) Internationale Anmeldenummer:
**PCT/EP94/00129**

(87) Internationale Veröffentlichungsnummer:
**WO 94/18712 (18.08.1994 Gazette 1994/19)**

(54) **VERFAHREN UND VORRICHTUNG ZUR UMWANDLUNG VON CHEMISCHER ENERGIE EINES BRENNSTOFFS IN THERMISCHE ENERGIE UND GLEICHZEITIG DIREKT IN ELEKTRISCHE ENERGIE**

PROCESS AND DEVICE FOR CONVERTING CHEMICAL ENERGY FROM A FUEL INTO THERMAL ENERGY AND, AT THE SAME TIME, DIRECTLY INTO ELECTRICAL ENERGY

PROCEDE ET DISPOSITIF PERMETTANT DE CONVERTIR L'ENERGIE CHIMIQUE D'UN COMBUSTIBLE EN ENERGIE THERMIQUE ET SIMULTANEMENT DIRECTEMENT EN ENERGIE ELECTRIQUE

(84) Benannte Vertragsstaaten:
**AT BE CH DE DK ES FR GB GR IE IT LI LU MC NL PT SE**

(30) Priorität: **15.02.1993 CH 447/93**

(43) Veröffentlichungstag der Anmeldung:
**01.02.1995 Patentblatt 1995/05**

(73) Patentinhaber: **KLAUS HERRMANN AKTIENGESELLSCHAFT**
**58239 Schwerte (DE)**

(72) Erfinder: **Bossel, Ulf, Dr.**
**CH-5400 Baden (CH)**

(74) Vertreter: **Patentanwälte**
**Meinke, Dabringhaus und Partner**
**Westenhellweg 67**
**44137 Dortmund (DE)**

(56) Entgegenhaltungen:
| | |
|---|---|
| EP-A- 0 374 636 | EP-A- 0 377 151 |
| EP-A- 0 486 911 | WO-A-86/06762 |
| DE-A- 3 716 297 | DE-A- 4 217 892 |
| US-A- 3 146 131 | US-A- 4 644 751 |
| US-A- 4 683 177 | |

- **EXTENDED ABSTRACTS. Bd. 87, Nr. 2 , 18. Oktober 1987 , PRINCETON, NEW JERSEY US Seiten 261 - 262 M. KRUMPELT ET AL 'SYSTEMS ANALYSES FOR HIGH-TEMPERATURE FUEL CELLS'**
- **JOURNAL OF POWER SOURCES. Bd. 37, Nr. 1-2 , Januar 1992 , LAUSANNE CH Seiten 279 - 292 TOMOHIDE SATOMI 'Fuel cells and the city of the future - a Japanese view'**
- **PATENT ABSTRACTS OF JAPAN vol. 15, no. 412 (E-1124)21. Oktober 1991 & JP,A,03 171 563 (NKK CORP) 25. Juli 1991**
- **INTERNATIONAL JOURNAL OF HYDROGEN ENERGY. Bd. 13, Nr. 10 , 1988 , OXFORD GB Seiten 625 - 632 T. YOSHIDA ET AL 'CONCEPTUAL DESIGN OF 200 kW TOWN GAS REFORMED MOLTEN CARBONATE FUEL CELL COGENERATION PLANT'**
- **IEEE TRANS. POWER APPAR. AND SYST. Bd. PAS-100, Nr. 10 , 10. Oktober 1981 Seiten 4309 - 4318 W. S. KU 'STUDY OF TECHNICAL AND ECONOMIC FEASIBILITY OF FUEL CELL COGENERATION APPLICATIONS BY ELECTRIC UTILITIES'**
- **PATENT ABSTRACTS OF JAPAN vol. 12, no. 204 (E-620)11. Juni 1988 & JP,A,63 002 263 (MATSUSHITA ELECTRIC IND CO) 7. Januar 1988**

EP 0 636 280 B1

## Beschreibung

## Technisches Gebiet

Vorrichtungen zu Heizzwecken und zur Erwärmung von Körpern mittels Brenner für flüssige und gasförmige Brennstoffe.

Brennstoffzellen für die direkte Umwandlung chemischer Energie in elektrische Energie.

Die Erfindung bezieht sich auf ein Verfahren und eine Vorrichtung zur Energieumwandlung ausgehend von einem primären Energieträger in Form eines Brennstoffs mit dem Ziel der gleichzeitigen, jedoch gegenseitig weitgehend unabhängigen Bereitstellung von thermischer und elektrischer Energie.

Im engeren Sinn behandelt die Erfindung ein Verfahren und eine Vorrichtung zur Umwandlung von chemischer Energie eines flüssigen und/oder gasförmigen Brennstoffs in thermische Energie zwecks Wärmebereitstellung in Haushalt oder Industrie, zu chemischen und metallurgischen Umsetzungen aller Art mittels eines Brenners und gleichzeitig direkt in elektrische Energie mittels einer Brennstoffzelle, dergestalt, dass nur ein Teil der chemisch gebundenen Energie des Primärbrennstoffs in Wärme, der Rest jedoch gleichzeitig direkt in elektrische Energie umgesetzt wird, wobei ein Brenner und ein Nachbrenner zur Umsetzung in Wärme, eine Brennstoffzelle zur Umsetzung in elektrische Energie, eine Einrichtung zur Übertragung und Ausnutzung des thermischen Energieanteils in Form eines Heizkessels oder Dampferzeugers und mindestens ein Wärmeaustauscher zur Rückführung und Ausnutzung mindestens eines Teils der Wärme im Kreislauf vorgesehen ist.

## Stand der Technik

Vorrichtungen zur Erwärmung von Körpern mittels Brenner für flüssige und gasförmige Brennstoffe sind in zahlreichen Varianten bekannt. Dabei kann man grundsätzlich zwei Typen unterscheiden: Brenner mit offener Flamme und natürlichem Zug, sogenannte atmosphärische Brenner, die bei Atmosphärendruck betrieben werden sowie Brenner mit Gebläse, welche unter Überdruck arbeiten und keinen natürlichen Kaminzug benötigen, wobei die Kontrolle besser zu bewerkstelligen ist als bei atmosphärischen Brennern.

Diese Brenner werden ausschliesslich dazu benutzt, um die chemische Energie des Brennstoffs vollständig in Wärme umzuwandeln.

Es ist bekannt, in grosstechnischen Kraftwerksanlagen die sogenannte Kraft/Wärme-Kopplung durchzuführen. Dabei wird die gesamte chemische Brennstoffenergie zunächst in thermische Energie und dann ein Teil mittels einer Wärmekraftmaschine (Dampfturbine, Gasturbine, Verbrennungsmotor, Sterlingmotor etc.) in mechanische Arbeit bzw. elektrische Energie umgesetzt, der Rest als Wärme (meist über Fernleitungen) an Verbraucher abgegeben.

Brennstoffzellen zur direkten Umwandlung von chemischer in elektrische Energie sind in zahlreichen Varianten bekannt. Die keramische Hochtemperatur-Brennstoffzelle mit Feststoffelektrolyt zeichnet sich durch hohen Wirkungsgrad und gute Anpassung an die Betriebsbedingungen aus. Sie kann sowohl im tiefen wie im mittleren Leistungsbereich erfolgreich eingesetzt werden.

Es ist schon vorgeschlagen worden, eine erdgasgespeiste Brennstoffzelle mit einem Heizkessel (nachgeschalteter Abwärmekessel) zur gleichzeitigen Elektrizitätserzeugung und Bereitstellung von Nutzwärme zur Raumheizung von Siedlungsgebieten zu kombinieren. Über die Art der anzustrebenden, für die Praxis geeigneten Betriebsweise und den konstruktiven Aufbau der zur Durchführung derartiger Verfahren notwendigen Anlage ist indessen kaum etwas Konkretes bekannt. Es sind auch schon Kombinationen von Brennstoffzelle mit Dampfturbine und Dampfanlage für Abwärmebereitstellung, ferner solche von Brennstoffzelle/Gasturbine/Dampfturbine und andere mehr vorgeschlagen worden. Bei all diesen Verfahren und Anlagen handelt es sich jedoch fast ausschliesslich um Wirkungsgradverbesserungs-Vorschläge für die grosstechnische Umwandlung von durch Verbrennung erhaltener thermischer in elektrische Energie. Dabei ist die eine Energiemenge von der anderen in verhältnismässig engen Grenzen abhängig. Überschreitung dieser Grenzen führt unweigerlich zu Betriebsschwierigkeiten und zur Unwirtschaftlichkeit. Insbesondere sollte die Nutzwärme am Ort des Verbrauchs bereitgestellt werden, was bei allen bekannten sogenannten Kraft/Wärme-Kopplungen nicht der Fall ist.

Die bestehenden Energieumwandlungsverfahren und Vorrichtungen lassen zu wünschen übrig. Die konventionellen Brenner liefern nur thermische Energie. Die Kraft/Wärme-Kopplung ist an grosse Leistungen gebunden und ist erst ab ca. 50 bis 200 kW überhaupt technisch-wirtschaftlich durchzuführen.

Der mechanische Aufwand derartiger Anlagen ist gross. Eine Entkoppelung des elektrischen Energieanteils vom thermischen Energieinhalt ist praktisch nicht möglich. Das heisst, dass immer eine bestimmte minimale Absatzmöglichkeit für beide Energieformen vorhanden sein muss, Bedingungen, die in der Praxis nur selten erfüllt werden.

Es existiert daher ein grosses Bedürfnis für die Bereitstellung von Verfahren und Vorrichtungen, die den praktischen Anforderungen an die Versorgung mit elektrischer und thermischer Energie in Haushalt und Industrie besser gerecht werden als die obengenannten konventionellen Energieumwandungsmethoden und Ausrüstungen.

Zum Stand der Technik werden die nachfolgenden Druckschriften zitiert:

- O. Antonsen, W. Baukal und W. Fischer, "Hochtemperatur-Brennstoffzellen-Batterie mit keramischem Elektrolyten". Brown Boveri Mitteilungen Januar/Februar 1966, Seiten 21-30.

- US-A-4692274
- US-A-4395468
- DE-A-3716297

## Darstellung der Erfindung

Der Erfindung liegt die Aufgabe zugrunde, ein Verfahren sowie eine Vorrichtung vorzuschlagen, welche die Umwandlung der chemischen Energie von flüssigen und/oder gasförmigen Brennstoffen zum Zweck der gleichzeitigen, jedoch gegenseitig weitgehend unabhängigen, entkoppelten Bereitstellung thermischer und elektrischer Energie zum Ziel hat, wobei ein hoher Wirkungsgrad bei der Umsetzung in elektrische Energie erreicht werden soll. Die Vorrichtung soll im Aufbau einfach sein und sich kostengünstig herstellen lasse. Ferner soll sich die Anlage besonders für den Leistungsbereich in Haushalt und Gewerbe eignen und auch in kleinen Einheiten einen hohen Gesamtenergie-Umsetzungsgrad und eine hohe Betriebssicherheit gewährleisten.

Diese Aufgabe wird dadurch gelöst, dass im eingangs erwähnten Verfahren der unter Überdruck angelieferte Primärbrennstoffstrom in mindestens zwei parallel geschaltete Teilströme aufgeteilt wird, wobei mindestens je ein Teilstrom separat gesteuert/reguliert und der Brennstoffzelle einerseits und dem Brenner andererseits separat zugeführt wird, dergestalt, dass eine völlige Entkoppelung des elektrischen Energiestroms vom thermischen Energiestrom in einem beliebigen prozentualen Verhältnis nach Massgabe des jeweiligen örtlichen und zeitlichen Bedarfs bewerkstelligt wird, dass der Strom des die Brennstoffzelle zu speisenden Sauerstoffträgers im Gegenstrom von den gemeinsamen Abgasen der Brennstoffzelle und des Brenners vorgewärmt wird, ferner die thermische Energie der besagten Abgase durch weitestgehende Abgabe ihrer fühlbaren Wärme einerseits an den für den Brenner bestimmten Teil des Primärbrennstoffs zu dessen Aufbereitung wie Verdampfung, Konvertierung in geeignete Gase und Durchführung der Wassergasreaktion sowie andererseits hauptsächlich an einen gasförmigen oder flüssigen Wärmeträger ausgenutzt wird, weiter ein Teil der latenten Wärme der Abgase durch Kondensation mindestens eines Teils ihres Wasserdampfgehalts zu einer ersten Vorwärmung des Sauerstoffträgers benutzt wird, und dass der Sauerstoffträgerstrom wahlweise in steuerbare/ regulierbare Teilströme aufgeteilt oder als Ganzes im Prozess geführt wird und aus thermodynamischen Gründen als Brennstoffzelle eine keramische Hochtemperatur-Feststoffelektrolytzelle vorgesehen ist, die mindestens zu einemTeil durch direkte Wärmeübertragung von heissen Brennerabgasen mittels Konvektion, Wärmeleitung und Strahlung aufgeheizt und auf der nötigen Betriebstemperatur gehalten wird.

Die Aufgabe wird ferner dadurch gelöst, dass sowohl der (die) Brenner als auch die Brennstoffzelle(n) und ferner sämtliche irgend einer Wärmeübertragung innerhalb des Kreislaufs dienenden Wärmeaustauscher, Vorwärmer, Brennstoffverdampfer und Konverter örtlich/geometrisch vollständig in einem nach aussen thermisch isolierten, vollständig abgeschlossenen, der Führung der gasförmigen Medien dienenden, als Warmwasser-Heizkessel und/oder Dampferzeuger und/oder Lufterhitzer und/oder Konverter ausgebildeten Behälter untergebracht und integriert sind, und die Brennstoffzelle im Zentrum des Bereichs hoher Temperatur, umgeben von als Ringbrenner oder Ringbrennkammer ausgebildetem Brenner und Nachbrenner angeordnet ist.

## Weg zur Ausführung der Erfindung

Die Erfindung wird anhand der nachfolgenden, durch Figuren näher erläuterten Ausführsbeispiele beschrieben.

Dabei zeigt:

Fig. 1     ein Fliessbild des grundsätzlichen Verlaufs der Stoffströme des Verfahrens,

Fig. 2     ein Fliessbild des Verfahrens mit vorverdichtetem Sauerstoffträger für die Brennstoffzelle und vorverdichteter Verbrennungsluft,

Fig. 3     ein Fliessbild des Verfahrens mit vorverdichtetem Sauerstoffträger für die Brennstoffzelle und nicht vorverdichteter Verbrennungsluft,

Fig. 4     ein Fliessbild des Verfahrens mit vorverdichtetem Sauerstoffträger für die Brennstoffzelle und alleiniger Verwendung des Restsauerstoffgehalts des Abgases der letzteren als gasförmiges Verbrennungsmedium,

Fig. 5     einen schematischen Längsschnitt/Aufriss durch den grundsätzlichen Aufbau der Vorrichtung,

Fig. 6     einen schematischen Längsschnitt/Aufriss durch eine Vorrichtung mit Ausbildung der Randpartie des Behälters als Vorwärmer für den Sauerstoffträger,

Fig. 7     einen schematischen Längsschnitt/Aufriss durch eine Vorrichtung mit Ausbildung der Randpartie des Behälters als Wärmeaustauscher,

Fig. 8     einen schematischen Längsschnitt/Aufriss durch eine Vorrichtung mit Ausbildung der Randpartie des Behälters teilweise als Vorwärmer für den Sauerstoffträger, teilweise als Wärmeaustauscher.

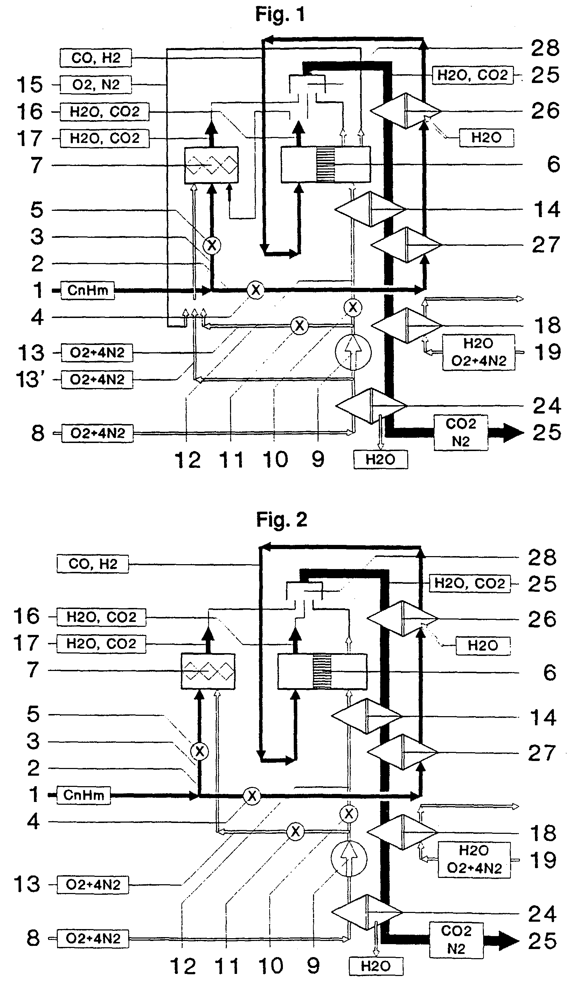

In Fig. 1 ist ein Fliessbild des grundsätzlichen Verlaufs der Stoffströme des Verfahrens dargestellt. list der mit einem gewissen Überdruck zugeführte Primärbrennstoffstrom, im vorliegenden Fall $CH_4$, allgemein irgend ein gasförmiger oder flüssiger Kohlenwasserstoff $C_nH_m$, reiner Wasserstoff oder Kohlenmonoxid, oder eine beliebige Kombination dieser Gase. Der Primärbrennstoffstrom 1 wird grundsätzlich zunächst in den Teilstrom 2 des Brennstoffs für die Brennstoffzelle und den Teilstrom 3 für den Brenner aufgeteilt. In der Linie des Teilstroms 2 liegt das Steuer/Regulier-Organ 4 für den Brennstoffzellen-Teilstrom und in der Linie des Teilstroms 3 das Steuer/Regulier-Organ 5 für den Brenner-Teilstrom des Primärbrennstoffs. Die Organe 4 und 5 können völlig unabhängig voneinander eingestellt und programmiert werden, sodass von Seiten des Primärbrennstoffzuflusses her die völlige Entkoppelung der Energieumwandlung in thermische Energie einerseits und in elektrische Energie andererseits ohne jegliche Verluste von Brennstoffströmen als Überschuss oder als Unterschuss über den ganzen Betriebsbereich gewährleistet ist. 6 ist die aus Sauerstoffträger-Kammer, Brennstoff-Kammer und Elektrolyt bestehende Brennstoffzelle. Aus thermodynamischen Gründen wird im vorliegenden Fall eine Brennstoffzelle mit keramischem Hochtemperatur-Festelektrolyt verwendet. 7 stellt den Brenner zur Umwandlung chemischer in thermische Energie dar. 8 ist der zunächst unter Atmosphärendruck stehende angelieferte Sauerstoffträgerstrom, im vorliegeden Fall im allgemeinen Luft $O_2 + 4N_2$. 9 ist ein Verdichter (Gebläse) für den Sauerstoffträger (Luft). Der Sauerstoffträgerstrom wird nach dem Verdichter in zwei Teilströme aufgeteilt. 10 ist das Steuer/Regulier-Organ für den Brennstoffzellen-Teilstrom, 11 dasjenige für den Brenner-Teilstrom des Sauerstoffträgers. Dementsprechend stellt 12 den vorverdichteten Teilstrom des Sauerstoffträgers für die Brennstoffzelle, 13 den vorverdichteten Teilstrom des Sauerstoffträgers für den Brenner dar. Alternativ wird der für den Brenner bestimmte Teilstrom 13' des Sauerstoffträgers schon vor dem Verdichter 9 abgezweigt. Dieser nicht vorverdichtete Teilstrom 13' entspricht dem Saugbetrieb (natürlicher Zug) eines sogenannten atmosphärischen Brenners. 14 stellt den Vorwärmer für den Sauerstoffträgerstrom 12 dar, der der Sauerstoffelektroden-Kammer der Brennstoffzelle 6 vorgeschaltet ist. 15 ist das Teilabgas ($O_2$, $N_2$) der Sauerstoffelektroden-Kammer, 16 das Teilabgas ($H_2O$, $CO_2$) der Brennstoffelektroden-Kammer der Brennstoffzelle 6. 17 stellt das Brennerabgas ($H_2O$, $CO_2$) dar. Alle diese Gase werden im Gesamt-Abgasstrom 25 von Brenner 7 und Brennstoffzelle 6 zusammengefasst. Sie werden zunächst in den Nachbrenner 25 geführt, wo sämtliche noch verbliebenen brennbaren Reste des Brennstoffs unter Wärmeentwicklung oxidiert werden. Der Gesamt-Abgasstrom 25 durchströmt nun den Konverter 26 zur Aufbereitung des Primärbrennstoffs, wo ihm ein Teil seiner Enthalpie zur Deckung des Energiebedarfs der für letzteren massgebenden endothermen Konvertierungsreaktion

$$C_nH_m + n\,H_2O \rightarrow n\,CO + (m/2 + n)\,H_2$$

entzogen wird. Die Einspritzung von Waserdampf in den Primärbrennstoff im Konverter 26 ist durch das Symbol $H_2O$ angedeutet. Der noch sehr heisse Gesamt-Abgasstrom 25 gelangt nun in den Vorwärmer 14 für den Sauerstoffträger und den Brennstoffverdampfer 27, wo flüssige Primärbrennstoffe vor ihrer Konvertierung in gasförmige Dämpfe umgewandelt werden. Der Hauptanteil der Abgasenthalpie wird dem Gesamt-Abgasstrom 25 im Wärmeaustauscher 18 entzogen. Hier wird über den Wärmeträger 19 die eigentliche Nutzwärme der Anlage ausgenutzt bzw. wegtransportiert. Das Mittel für diese Wärmeübertragung ist Warmwasser, Dampf oder Luft und dient zur Raumheizung, industriellen Heizung, zum Kochen, zur Durchführung von chemischen oder physikalischen Prozessen und dergleichen mehr. Der letzte Rest der fühlbaren Wärme und ein Teil der latenten Wärme wird dem Gesamt-Abgasstrom 25 im Abgaskondensation-Wärmeaustauscher 24 entzogen, der durch den kalten Sauerstoffträgerstrom 8 gekühlt wird. Dank vorzüglicher Isolierung und optimaler Führung der Stoff- und Energieströme wird mit diesem quasi-adiabaten Fliessbild ein sehr hoher Gesamt-Energieumsetzungsgrad (nicht zu verwechseln mit "Wirkungsgrad") erreicht.

In Fig. 2 ist ein Fliessbild des Verfahrens mit vorverdichtetem Sauerstoffträger für die Brennstoffzelle und vorverdichteter Verbrennungsluft dargestellt. Der gesamte Kreislauf für den Primärbrennstoff mit den Bezugszeichen 1, 2, 3, 4, 5, 6 und 7 bleibt gegenüber dem allgemeinen Fliessbild Fig. 1 unverändert. Der gesamte Sauerstoffträgerstrom 8 wird im Verdichter 9 auf einen höheren Druck gebracht, verzweigt sich, wird in den Steuer/Regulier-Organen 10 und 11 in der Durchflussmenge beeinflusst und gelangt als Teilströme 12 und 13 in die Brennstoffzelle 6 bzw. in den Brenner 7. Das ganze nachgeschaltete Schema bleibt sich gleich und entspricht dem Fliessbild gemäss Fig. 1. Die Stoffströme 13' und 15 fehlen. Dieses Fliessbild stellt als konkrete Ausführungsform den allgemeinsten und wohl auch sehr häufig auftretenden Fall dar. Die Bezugszeichen 14, 16, 17, 18, 19, 24, 25, 26, 27 und 28 entsprechen genau denjenigen der Fig. 1.

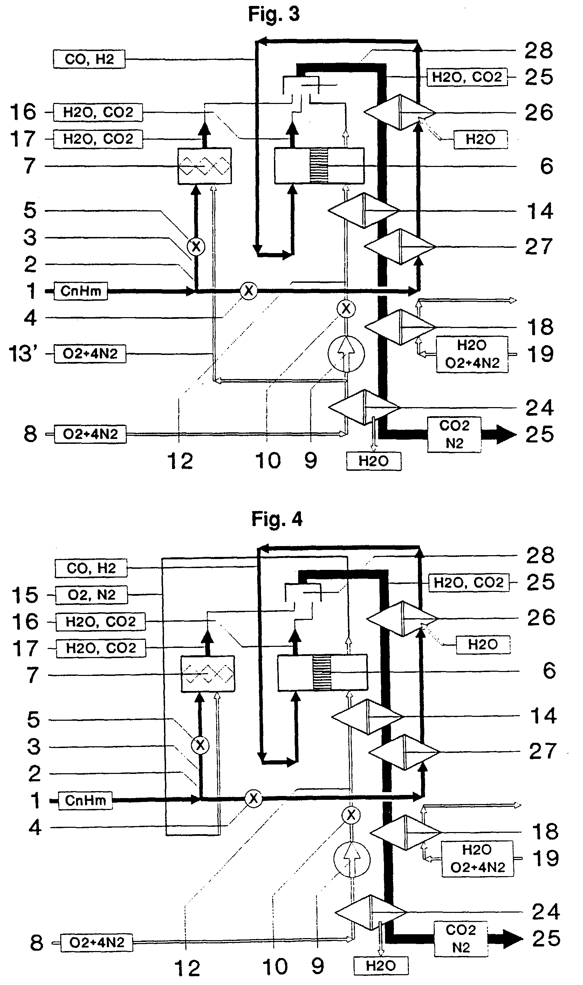

Fig. 3 ist ein Fliessbild des Verfahrens mit vorverdichtetem Sauerstoffträger für die Brennstoffzelle und nicht vorverdichteter Verbrennungsluft. Letztere gelangt direkt in den sogenannten atmosphärischen Brenner 7, was durch den Teilstrom 13' des Sauerstoffträgers angedeutet ist. Dies entspricht dem Saugbetrieb unter dem Einfluss des natürlichen Zuges (Kaminzug). Dementsprechend fällt das Steuer/Regel-Organ 11 sowie die Stoffströme 13 und 15 weg. Der Verlauf des Primärbrennstoffstroms mit den Bezugszeichen 1, 2, 3, 4, 5, 6 und 7 bleibt unverändert. Alle übrigen Bezugszeichen entsprechen denjenigen der Fig., 1. Diese Schema bietet für sehr einfache Anlagen kostenmässige Vorteile, da ein Steuer/Regel-Organ wegfällt und der Verdichter 9 nur für die vergleichsweise gegenüber der Gesamtflussmenge geringere Durchflussmenge des Teilstroms 12 ausgelegt werden muss.

Fig. 4 zeigt ein Fliessbild des Verfahrens mit vorverdichtetem Sauerstoffträger für die Brennstoffzelle und alleiniger Verwendung des Restsauerstoffgehalts des Abgases der letzteren als gasförmiges Verbrennungsmedium. Der Verlauf des Primärbrennstoffs entsprechend Bezugszeichen 1, 2, 3, 4, 5, 6 und 7 bleibt gegenüber Fig. 1 unverändert. Der Verdichter 9 ist bezüglich Durchflussmenge und Druck derart ausgelegt, dass sowohl die Brennstoffzelle 6 als auch der Brenner 7 genügend mit Sauerstoff versorgt wird. Es handelt sich hier um eine Serieschaltung von Sauerstoffelektroden-Kammer der Brennstoffzelle 6 und nachgeschaltetem Brenner 7. Als charakteristischer Stoffstrom wird hier das Teilabgas 15 der Sauerstoffelektroden-Kammer der Brennstoffzelle 6 dem Brenner 7 mit einem gewissen Überdruck zugeleitet. Das Steuer/Regulier-Organ 11 sowie der Stoffstrom 13 entfallen. Die übrigen Bezugszeichen entsprechen denjenigen der Fig. 1.

Betreffend Durchführung von weiteren Verfahrensvarianten soll hier darauf aufmerksam gemacht werden, dass sich das Fliessbild gemäss Fig. 4 mit demjenigen gemäss Fig. 2 oder demjenigen gemäss Fig. 3 in beliebigem Mengenverhältnis der Sauerstoffträgerströme kombinieren lässt. Der Verlauf des Primärbrennstoffs bleibt immer der gleiche. Die Kombination von Fliessbildern eröffnet eine weitere Anpassungsfähigkeit des Verfahrens.

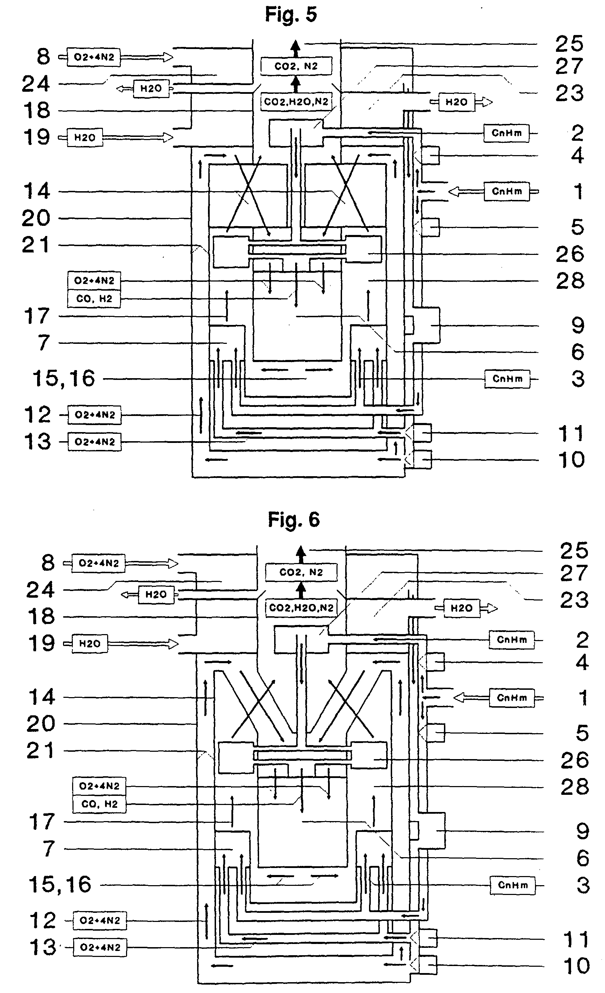

In Fig. 5 ist ein schematischer Längsschnitt/Aufriss durch den grundsätzlichen Aufbau der Vorrichtung dargestellt. Diese Figur zeigt das Konstruktionsprinzip der gesamten Anlage, in der alle wesentlichen Bauelemente und Einrichtungen zu einem sehr kompakten Block vereinigt und entsprechend dem gewählten Verfahren integriert sind. Die Vorrichtung besteht aus einem vorzugsweise zylindrischen oder prismatischen Behälter 20, in dessen Innerem die Brennstoffzelle und der Brenner sowie verschiedene Wärmeaustauscher, auf dessen oberem Teil die Nutzwärmeeinrichtung und weitere Apparate und auf dessen Mantel einige Zusatzgeräte angeordnet sind. Der Sauerstoffträgerstrom 8 wird über einen Stutzen in den oberen Teil des Behälters 20 eingeleitet, durchströmt den Abgaskondensations-Wärmeaustauscher 24 zur Kühlung des Gesamt-Abgasstroms 25 und gelangt über eine seitlich angeordnete Leitung und den Verdichter 9 zu den unten seitlich angeordneten Steuer/Regulier-Organen 10 und 11 . Von 11 gelangt der Teilstrom 13 über eine Leitung in der Bodenpartie in den Brenner 7 (hier als Ringbrennkammer ausgebildet), während der von 10 ausgehende Teilstrom 12 in der Randpartie 21 des Behälters 20 nach oben geführt wird, den ringförmig angeordneten Vorwärmer 14 durchströmt und absteigend der zentral an der heissesten Stelle eingebauten Brennstoffzelle 6 zugeführt wird. Der Primärbrennstoffstrom 1 wird über einen sich im oberen Drittel der Aussenwand des Behälters 20 befindlichen Stutzen und eine Verzweigung den Steuer/Regulier-Organen 4 und 5 zugeführt. Der Teilstrom 2 gelangt über eine vertikale Leitung zum Brennstoffverdampfer 27 im Inneren der Apparatur, der vom Gesamt-Abgasstrom 25 von Brenner und Brennstoffzelle erwärmt wird. Von hier gelangt der Brennstoff über ein zentrales Rohr vertikal nach unten und wird radial nach aussen dem Konverter 26 (im vorliegenden Fall ringförmig ausgeführt) zur Durchführung der endothermen chemischen Reaktionen (Aufbereitung, Umwandlung in H2 und CO) zugeführt. Der Konverter 26 befindet sich unmittelbar über dem Brenner 7 und ist somit der für die Reaktionen notwendigen Temperatur ausgesetzt. Der konvertierte Brennstoff (Sekundärbrennstoff) wird zunächst radial nach innen und dann zentral vertikal absteigend in die Brennstoffzelle 6 geführt. Die Teilabgase 15 und 16 der letzteren strömen radial nach aussen, werden umgelenkt und senkrecht nach oben geleitet, wo sie sich mit dem ebenfalls senkrecht nach oben strömenden Brennerabgas 17 vermischen und im unmittelbar nachgeschalteten Nachbrenner 28 bis zur vollständigen Oxidation des verbliebenen Restbrennstoffs miteinander reagieren. Der über das Steuer/Regulier-Organ 5 geführte Teilstrom 3 des Brennstoffs gelangt über eine an der Aussenwand des Behälters 20 angebrachte senkrechte Leitung und eine radiale Zuführung ins Innere und senkrecht nach oben direkt in den ringförmigen Brenner 7. In der oberen, nach innen stark erweiterten Randpartie des Behälters 20 befindet sich der der Nutzwärmeverwertung dienende Wärmeaustauscher 18, hier als Wassermantelteil 23 ausgebildet. Der Wärmeaustauscher 18 wird vom Wärmeträger 19, im vorliegenden Fall Wasser zur Raumheizung und/oder Gebrauchwasserbereitstellung, im Gleichstrom, Kreuzstrom oder Gegenstrom durchflossen. Er wird zwecks Aufheizung vom Gesamt-Abgasstrom 25 von Brenner und Brennstoffzelle durchsetzt. In dieser Figur ist dies lediglich schematisch ausgestaltet. In Wirklichkeit nimmt dieser Teil der Vorrichtung einen wesentlichen Raum ein und ist mit Rohrleitungen ausgerüstet und von "Zügen" durchsetzt, um die notwendige Wärmeübertragungsfläche bereitzustellen.

In Fig 6 ist ein schematischer Längsschnitt/Aufriss durch eine Vorrichtung mit Ausbildung der Randpartie des Behälters als Vorwärmer für den Sauerstoffträgerstrom dargestellt. Der gesamte obere Teil des Behälters 20 mit dem Eintrittsstutzen für den Sauerstoffträgerstrom 8, dem Abgaskonsendations-Wärmeaustauscher 24 zur Kühlung des Gesamt-Abgasstromes 25, dem Brennstoffverdampfer 27 und dem als Wassermantelteil 23 ausgebildeten, vom Wärmeträger 19 durchflossenen Wärmeaustauscher 18 bleibt gegenüber Fig. 5 unverändert. Das gleiche gilt für die aktiven inneren Organe wie Brennstoffzelle 6, Brenner 7, Konverter 26, Nachbrenner 28 und die zugehörige Führung der entsprechenden Stoffströme 2, 13, 15, 16 und 17. Auch an den auf der rechten Bildhälfte angeordneten Leitungen und Zubehörteilen wie Eintrittsstutzen für Primärbrennstoffstrom 1, Regulier/Steuer-Organen 4, 5, 10 und 11 und Verdichter 9 ändert sich nichts gegenüber Fig 5. Dagegen ist die Randpartie 21 des Behälters 20 hier als Vorwärmer 14 für den Sauerstoffträgerstrom (Teilstrom 12) ausgebildet, wobei die Wärmeübertragung vom Brennerabgas 17 durch die Zwischenwand radial nach aussen erfolgt (im vorliegenden Fall als Gleichstrom gezeichnet). Es versteht sich von selbst, dass diese Wärmeübertragung durch geringfügige Anpassung der Führung des Teilstroms 12 auch nach dem Kreuz- oder Gegenstrom-Prinzip erfolgen kann.

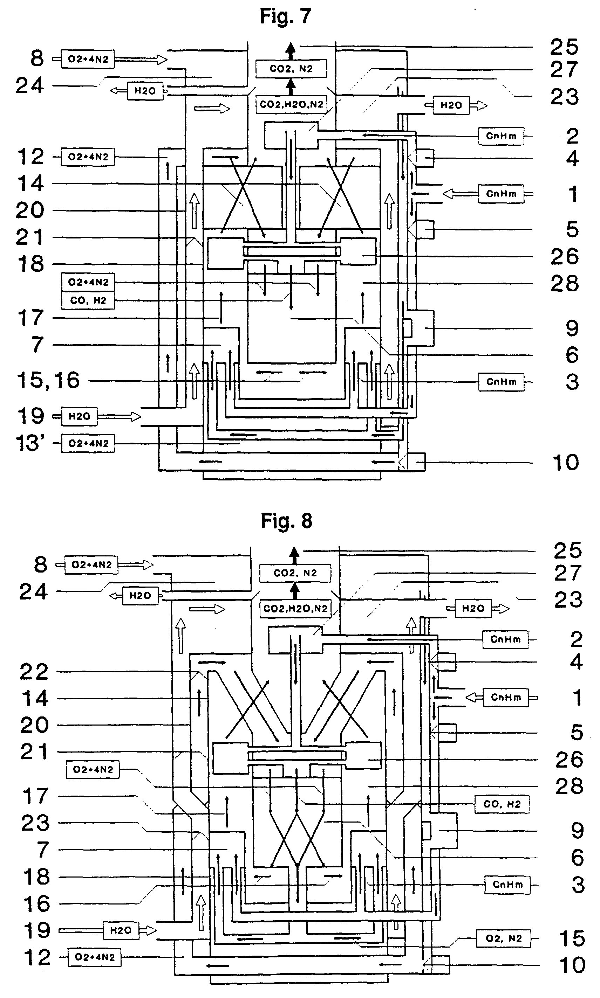

Fig. 7 bezieht sich auf einen schematischen Längsschnitt/Aufriss durch eine Vorrichtung mit Ausbildung der Randpartie des Behälters als Wärmeaustauscher. Der gesamte innere und obere Teil des Behälters 20 entspricht der Ausführung gemäss allgemeinem Konstruktionsprinzip der Vorrichtung nach Fig. 5. Dies bezieht sich insbesondere auf die Einzelteile und Stoffströme, die den Bezugszeichen 2, 3, 6, 7, 8, 14, 15, 16, 17, 23, 24, 25, 26, 27 und 28 entsprechen. Die Randpartie 21 des Behälters 20 ist im vorliegenden Fall als vom Wärmeträger 19 (Warmwasser) durchströmter Wärmeaustauscher 18 für die Nutzwärme ausgebildet. Der Wärmeübergang erfolgt vom Brennerabgas 17 durch die Zwischenwand radial nach aussen auf den Wärmeträger 19. Der Primärbrennstoffstrom 1 wird gemäss Fig. 5 geteilt und über die Steuer/Regulier-Organe 4 und 5 den entsprechenden Verbrauchern im Inneren des Behälters 20 zugeleitet. Der Sauerstoffträgerstrom 8 wird vor dem Verdichter 9 aufgeteilt, wobei der für den Brenner 7 bestimmte Teilstrom 13' ohne Verdichtung direkt dem atmosphärischen Brenner für natürlichen Luftzug (Saugbetrieb) zugeführt wird. Der für die Brennstoffzelle 6 bestimmte Teilstrom 12 wird über das Steuer/Regulier-Organ 10 und eine vertikale Rohrleitung von der Aussenwand des Behälters 20 hochgeführt, umgelenkt, durch den Vorwärmer 14 geschickt und von oben der Brennstoffzelle 6 zugeführt.

Fig. 8 zeigt einen schematischen Längsschnitt/Aufriss durch eine Vorrichtung mit Ausbildung der Randpartie des Behälters 20 teilweise als Vorwärmer für den Sauerstoffträgerstrom, teilweise als Wärmeaustauscher. Die im Inneren des Behälters 20 angeordneten Einzelteile und ein Teil der Stoffströme entsprechen den Bezugszeichen 2, 3, 6, 7, 8, 17, 23 (teilweise), 24, 25, 26, 27 und 28 sind unverändert von Fig. 5 übernommen. Das gleiche gilt für den Einrtittsstutzen des Primärbrennstoffstromes 1 und die Steuer/Regulier-Organe 4 und 5, die seitlich rechts am Behälter 20 befestigt sind. Der Sauerstoffträgerstrom 8 wird im Verdichter 9 an der Seite rechts des Behälters 20 komprimiert und über das einzige Steuer/Regulier-Organ 10 als Teilstrom 12 für die Brennstoffzelle 6 zunächst dem in der unteren Hälfte im Wassermantelteil 23 der Randpartie des Behälters 20 untergebrachten, vom Wärmeträger 19 (Warmwasser) durchfluteten Wärmeaustauscher 18 zugeführt. Dann gelangt der Sauerstoffträgerstrom in den sich darüber befindlichen Vorwärmerteil 22 der Randpartie des Behälters 20, in der sich der Vorwärmer 14 (im vorliegenden Fall Gleichstromprinzip) befindet. Die gesamte Randpartie 21 des Behälters führt hier ausserdem im äusseren Bereich den Wärmeträger 19 in einem Kanal (Rohrleitung oder Wassermantel) nach oben. Am Austritt der Brennstoffzelle 6 wird das Teilabgas 16 der Brennstoffelektroden-Kammer radial nach aussen, dann nach oben in den Nachbrenner 28 geleitet, während das Teilabgas 15 der Sauerstoffelektroden-Kammer in einem zentralen Rohr nach unten geführt, radial nach aussen geleitet und dem Brenner 7 von unten zugeführt wird.

**<u>Ausführungsbeispiel 1:</u>**

Siehe Figuren 2 und 6!

Das Verfahren zur Umwandlung von chemischer Energie in thermische und gleichzeitig direkt in elektrische Energie wurde nach dem Fliessbild gemäss Fig. 2 in einer Vorrichtung gemäss Fig. 6 durchgeführt. Zu diesem Zweck stand ein zylindrischer, vertikalachsiger Behälter 20 aus Stahlblech zur Verfügung, dessen aussen mit Keramikwolle isolierter Doppelmantel bis zu ca. 2/3 seiner Höhe als Vorwärmer 14 für den Sauerstoffträgerstrom (Luft $O_2+4N_2$) ausgebildet war. Im oberen Drittel bestand der Apparat im wesentlichen aus dem Abgaskondensations-Wärmeaustauscher 24, dem Wärmeaustauscher 18 für die Nutzwärme in Form eines zylindrischen Warmwasserkessels für den Durchfluss des Wärmeträgers 19 ($H_2O$) und dem Brennstoffverdampfer 27. Die Vorrichtung wurde mit einem angelieferten, schwefelfreien Leichtöl als Primärbrennstoffstrom 1 ($C_nH_m$) betrieben, der ein Verdampfen bedingte. Etwa in halber Höhe des Behälters 20 war in dessen Innerem der Konverter 26 zur Aufbereitung des Primärbrennstoffs untergebracht, der unter $H_2O$-Dampfeinspritzung im wesentlichen in ein Gemisch von CO und $H_2$ umgesetzt wurde. Da diese Reaktion endotherm verläuft, befindet sich der Konverter 26 in unmittelbarer Nähe der zentral angeordneten Batterie von Brennstoffzellen 6, des Brenners 7 und des Nachbrenners 28. Die Brennstoffzellen 6 waren keramische Hochtemperaturzellen mit Feststoffelektrolyt in Plattenform von 100 mm x 100 mm aktiver einseitiger Oberfläche. Es waren total 2 Reihen von je 50 Zellen, jede Reihe zu einem Stapel zusammengebaut, vorhanden. Die Ebenen der Elektrolytplatten standen senkrecht und wurden von den gasförmigen Medien von oben nach unten bestrichen. Die elektrische Serienschaltung ergab eine totale Leerlaufspannung von 102 V. Bei einem Nennstrom von 40 A (Stromdichte = 0.2 A/cm2) betrug die Spannung 70 V, was eine Gleichstromleistung von 1,4 kW ergab. Der Gleichstrom wurde in einem Wechselrichter in Wechselstrom von 220 V Spannung umgeformt. Die mittlere Temperatur der Brennstoffzellen 6 betrug 880°C. Sie wurde über Thermostaten, die auf die Steuer/Regulierorgane 4 und 10 einwirkten, in einem engen Bereich konstant gehalten.

Der Sauerstoffträgerstrom 8 bestand im vorliegenden Fall aus atmosphärischer Luft, die im Verdichter 9 auf das für einen einwandfreien Betrieb nötigen Überdruck gebracht wurde. Im vorliegenden Fall wurden die Stoffströme der gasförmigen Medien derart eingestellt, dass ca. 15% der chemischen Energie des Primärbrennstoffs in elektrische Energie, der Rest in thermische Energie umgewandelt wurden. Dabei wurde der Prozess derart geführt, dass der gesamte, in den Brennstoffzellen 6 nicht verbrauchte Sekundärbrennstoff im Nachbrenner 28 verbrannt wurde. Letzerer lieferte einen namhaften Anteil an die im Konverter 25 benötigte Wärmeenergie. Dadurch wurden Wärmeverluste weitgehend vermieden und der Wirkungsgrad der Anlage erhöht.

Die chemische Leistung des Primärbrennstoffstroms 1 betrug ca. 9.4 kW, die elektriche Gleichstromleistung 1,4 kW, die thermische Leistung (Nutzwärme) 7.8 kW. Der totale Energienutzungsgrad betrug demzufolge ca. 98%. Der Primärbrennstoffstrom 1 erreichte einen durchschnittlichen Wert von 0,75 kg/h Leichtöl.

**Ausführungsbeispiel 2:**

Siehe Figuren 3 und 7!

Das Verfahren wurde nach dem Fliessbild Fig. 3 in einer ungefähr Fig 7 entsprechenden Vorrichtung durchgeführt. Ein sogenannter Brennwertkessel (Kondensationskessel) für Gasbefeuerung mittels atmosphärischem Brenner 7 wurde im Inneren seines unteren Teils innerhalb der als Wärmeaustauscher 18 (Wassermantel) ausgeführten Randpartie 21 des Behälters 20 mit einem Einsatz versehen, der in seinem unteren Teil eine Einschuböffnung besass. In diesem Einschub war eine Batterie von keramischen Hochtemperatur-Brennstoffzellen 6 eingebaut. Die Batterie bestand aus zwei Reihen mit je 50 plattenförmigen Einzelzellen mit keramischem Festelektrolyten von 100 mm x 100 mm aktiver einseitige Oberfläche. Die mit ihren Ebenen vertikal angeordneten Brennstoffzellen wurden elektrisch in Serie geschaltet, was eine totale Leerlaufspannung der ganzen Batterie von 103 Volt ergab. Unter Belastung mit einem Nennstrom von 20 A (Stromdichte = 0.2 A/cm2) betrug die Zellenspannung 72 V, was einer Gleichstromleistung von 1,44 kW entsprach. Der Gleichstrom wurde mit einem Wechselrichter in Wechselstrom von 220 V Spannung umgewandelt und ins öffentliche Netz eingespeist. Die Temperatur der Brennstoffzelle betrug im Durchschnitt 870°C und wurde über einen Thermostaten in einem engen Bereich konstant gehalten. Letzterer steuerte ein auf die Zufuhr der Brennstoffmenge (2) wirkendes Steuer/Regulier-Organ 4 sowie ein Steuer/Regulier-Organ 10 für die Luftzufuhr.

Die Brennstoffzellen 6 wurden mit Erdgas (Eintritt des Primärbrennstoffstroms 1) und Luft (Eintritt des Sauerstoffträgerstroms 8) betrieben. Eine Verdampfung entfiel, weshalb der Brennstoffverdampfer 27 überbrückt war. Die Zufuhr dieser gasförmigen Medien erfolgte mit hohem Überschuss gemessen am theoretischen Bedarf der Brennstoffzellen 6, sodass nur ein Teil (im vorliegenden Fall ca. 10%) der chemischen Energie in elektrische Energie umgesezt wurde. Der weitaus grössere Teil wurde in einem unabhängigen atmosphärischen Brenner 7 und einem den Brennstoffzellen 6 nachgeschalteten Nachbrenner 28 für die vollständige Oxidation des Restbrennstoffes in Wärme umgesetzt. Ein auf hohem Temperaturniveau befindlicher Teil der letzteren diente der Vorwärmung (14) des Teilstroms 12 der Luft für die Brennstoffzellen 6, ein auf tieferem Temperaturniveau befindlicher Teil zur Erwärmung des als Wassermantel ausgeführten Wärmeaustauschers 18. Die bereits abgekühlten Verbrennungsgase wurden einem nachgeschalteten Abgaskondensations-Wärmeaustauscher 24 zugeführt und bis auf ca. 50°C abgekühlt. Dabei kondensierte ein Teil des bei der Verbrennung gebildeten Wasserdampfs zu Wasser. Die anfallende Kondensationswärme wurde dem Sauerstoffträgerstrom 8 zugeführt.

Bei einer Gaszufuhr am Brennstoffeintritt 1 entsprechend einer chemischen Leistung von 14.3 kW wurde eine elektrische Gleichstromleistung von 1,44 kW und eine Wärmeleistung von 12,76 kW ermittelt. Dank hervorragender Isolierung des Kessels waren die Wärmeverluste praktisch vernachlässigbar. Die zusätzliche Wärmerückgewinnung durch teilweise Kondensation der Abgase führte auf einen totalen Energienutzungsgrad von ca. 99%. Da elektrische Energie und Wärme exergetisch verschiedenes Gewicht haben, sollte in diesem Zusammenhang nicht von einem "Gesamtwirkungsgrad" gesprochen werden.

**Ausführungsbeispiel 3:**

Siehe Figuren 4 und 8!

Zur Durchführung des Verfahrens nach Fliessbild Fig. 4 stand eine Vorrichtung gemäss Fig. 8 zur Verfügung. Der mit einer Keramikmatte isolierte, zylindrische, vertikalachsige Behälter 20 aus Stahlblech beherbergte in seiner Randpartie 21 in seiner unteren Hälfte im Wassermantelteil 23 den vom Wärmeträger 19 ($H_2O$) von unten nach oben durchflossenen Wärmeaustauscher 18 für die Nutzwärmeabgabe. Darüber befand sich in der oberen Hälfte im Vorwärmerteil 22 der Randpartie der von unten nach oben vom Teilstrom 12 des Sauerstoffträgers ($O_2+4N_2$) durchflutete Vorwärmer 14. Im vorliegenden Fall war der Teilstrom 12 mit dem ursprünglichen, angelieferten Sauerstroffträgerstrom 8 identisch. Der oberste Teil der Apparatur war im wesentlichen gleich wie im Beispiel 1 (siehe Fig. 6) ausgeführt und enthielt den Abgaskondensations-Wärmeaustauscher 24 und den Brennstoffverdampfer 27. Die Anlage wurde mit Flüssiggas als Primärbrennstoffstrom 1 ($C_nH_m$) betrieben. Der innere Aufbau der Vorrichtung mit Konverter 26, Brennstoffzellen 6, Brenner 7 und Nachbrenner 28 entsprach ungefähr demjenigen von Beispiel 1. Die in Stapeln von je 50 Elementen zusammengefassten Brennstoffzellen waren die gleichen wie unter Beispiel 1 beschreiben. Es waren total 2 Stapel vorhanden, deren plattenförmige Zellen mit ihren Ebenen senkrecht angeordnet waren. Bei Serien-Schaltung ergab sich unter einem Nennstrom von 20 A (Stromdichte = 0,2 A/cm2) und einer Spannung von 73 V eine Gleichstromleistung von 1.46 kW. Die mittlere Temperatur der Brennstoffzellen betrug ca. 875°C. Für die Leistungseinstellung waren die Steuer/Regulier-Organe 4 und 10 verantwortlich.

Der Sauerstoffträgerstrom 8 ($O_2+4N_2$) wurde durch ein einziges Steuer/Regulier-Organ 10 eingestellt. Sowohl der als Ringbrennkammer ausgeführte Brenner, als auch der Nachbrenner 28 erhielt ungebundenen Sauerstoff nur über die Brennstoffzellen 6 in Form des Teilabgases 15 ($O_2$, $N_2$) der Sauerstoffelektroden-Kammer. Im vorliegenden Fall wurden die Stoffströme der gasförmigen Medien derart eingestellt, dass ca. 8% der chemischen Energie des Primärbrennstoffs in elektrische Energie, der Rest in Wärme umgewandelt wurden.

Die chemische Leistung des Primärbrennstoffstroms 1 betrug 18.3 kW, die elektrische Gleichstromleistung 1.46 kW, die thermische Nutzleistung 16.4 kW. Der totale Energieumwandlungsgrad betrug demnach knapp 97%. Der Durchsatz des Primärbrennstoffs ergab sich zu ca.1,8 kg/h Flüssiggas.

Die Erfindung ist nicht auf die Ausführungsbeispiele beschränkt.

Das Verfahren zur Umwandlung von chemischer Energie eines flüssigen und/oder gasförmigen Brennstoffs in thermische Energie zwecks Wärmebereitstellung in Haushalt oder Industrie, zu chemischen und metallurgischen Umsetzungen aller Art mittels eines Brenners und gleichzeitig direkt in elektrische Energie mittels einer Brennstoffzelle, dergestalt, dass nur ein Teil der chemisch gebundenen Energie des Primärbrennstoffs in Wärme, der Rest jedoch gleichzeitig direkt in elektrische Energie umgesetzt wird, wird durchgeführt indem der unter Überdruck angelieferte Primärbrennstoffstrom 1 in mindestens zwei parallel geschaltete Teilströme 2; 3 aufgeteilt wird, wobei mindestens je ein Teilstrom separat gesteuert/reguliert 4;5 und der Brennstoffzelle 6 einerseits und dem Brenner 7 andererseits separat zugeführt wird, dergestalt, dass eine völlige Entkoppelung des elektrischen Energiestroms vom thermischen Energiestrom in einem beliebigen prozentualen Verhältnis nach Massgabe des jeweiligen örtlichen und zeitlichen Bedarfs bewerkstelligt wird, und der Strom 12 des die Brennstoffzelle 6 zu speisenden Sauerstoffträgers im Gegenstrom von den gemeinsamen Abgasen 25 der Brennstoffzelle 6 und des Brenners 7 vorgewärmt wird, ferner die thermische Energie der besagten Abgase durch weitestgehende Abgabe ihrer fühlbaren Wärme einerseits an den für den Brenner 7 bestimmten Teil des Primärbrennstoffs zu dessen Aufbereitung wie Verdampfung 27, Konvertierung 26 in geeignete Gase und Durchführung der Wassergasreaktion sowie andererseits hauptsächlich an einen gasförmigen oder flüssigen Wärmeträger 19 ausgenutzt wird, weiter ein Teil der latenten Wärme der Abgase durch Kondensation 24 mindestens eines Teils ihres Wasserdampfgehalts zu einer ersten Vorwärmung des Sauerstoffträgers 8 benutzt wird, und der Sauerstoffträgerstrom 8 wahlweise in steuerbare/ regulierbare Teilströme 12;13 aufgeteilt oder als Ganzes im Prozess geführt wird und aus thermodynamischen Gründen als Brennstoffzelle 6 eine keramische Hochtemperatur-Feststoffelektrolytzelle vorgesehen ist, die mindestens zu einemTeil durch direkte Wärmeübertragung von heissen Brennerabgasen 17 mittels Konvektion, Wärmeleitung und Strahlung aufgeheizt und auf der nötigen Betriebstemperatur gehalten wird.

In einer ersten Ausgestaltung des Verfahrens wird der Sauerstoffträgerstrom 8 zunächst vorverdichtet 9, in mindestens je einen Teilstrom 13 für den Brenner 7 und einen dazu parallel geschalteten Teilstrom 12 für die Brennstoffzelle 6 aufgeteilt und jeder Teilstrom 12;13 separat gesteuert/reguliert 10;11, dergestalt, dass jedem zugeordneten Teilstrom 2;3 des Primärbrennstoffs diejenige Sauerstoffmenge zugeführt wird, die für eine völlig unabhängige Umsetzung in elektrische und thermische Energie im Sinne der Entkoppelung nach Massgabe des Bedarfs erforderlich ist. In einer zweiten Ausgestaltung desVerfahrens wird der für den Brenner bestimmte Teil des Sauerstoffträgerstroms 8 ohne Vorverdichtung, unter Ausnutzung des natürlichen Saugzuges eines atmosphärischen Brenners 7 abgezweigt und lediglich der für die Brennstoffzelle 8 bestimmte Teil 12 vorverdichtet, separat gesteuert/reguliert 10 und der letzteren zugeführt. In einer weiteren Ausgestaltung des Verfahrens wird der Sauerstoffträgerstrom 8 als Ganzes zunächst verdichtet 9, gesteuert/reguliert 10, der Brennstoffzelle 6 zugeführt, dort entsprechend weiter erhitzt und als Reststrom in Form des Teilabgasstroms 15 der Sauerstoffelektroden-Kammer dem der Brennstoffzelle in Serie nachgeschalteten Brenner 7 zugeleitet.

Vorzugsweise wird das Verfahren derart durchgeführt, dass der der Brennstoffzelle 6 zugeführte Teilstrom 2 des Primärbrennstoffstroms 1 bezüglich Zusammensetzung und Menge durch das der Brennstoffzelle 6 vorgeschaltete Organ 4 dergestalt gesteuert/reguliert wird, dass nach Durchströmen der Brennstoffzelle 6 ein weiterhin oxydierbarer Bestandteil übrig bleibt und dass der entsprechende Teilabgasstrom 16 der Brennstoffelektroden-Kammer dem Brenner 7 als zusätzlicher Restbrennstoff zugeführt wird. Vorteilhafterweise wird zur Inbetriebsetzung der Brennstoffzelle 6 zunächst deren Teilstrom 2 des Primärbrennstoffs vollständig abgeschaltet 4 und die Brennstoffzelle 6 unter Vermeidung der Zuführung elektrischer Energie lediglich zu einem Teil durch direkte Wärmeübertragung von heissen Brennerabgasen 17 mittels Konvektion, Wärmeleitung und Strahlung, zum anderen Teil durch ihren von den Brennerabgasen 17 mittelbar aufgeheizten Teilstrom 12 des Sauerstoffträgers auf Betriebstemperatur gebracht.

Die Vorrichtung zur Durchführung des Verfahrens zur Umwandlung von chemischer Energie eines flüssigen und/oder festen Brennstoffs in thermische Energie und gleichzeitig direkt in elektrische Energie weist einen Brenner 7 und einen Nachbrenner 28 zur Umsetzung in Wärme, eine Brennstoffzelle 6 zur Umsetzung in elektrische Energie, eine Einrichtung 18 zur Übertragung und Ausnutzung des thermischen Energieanteils in Form eines Heizkessels oder Dampferzeugers und mindestens einen Wärmeaustauscher zur Rückführung und Ausnutzung mindestens eines Teils der Wärme im Kreislauf auf, wobei sowohl der (die) Brenner 7 als auch die Brennstoffzelle(n) 6 und ferner sämtliche irgend einer Wärmeübertragung innerhalb des Kreislaufs dienenden Wärmeaustauscher 18;24, Vorwärmer 14, Brennstoffverdampfer 27 und Konverter 26 örtlich/geometrisch vollständig in einem nach aussen thermisch isolierten, vollständig abgeschlossenen, der Führung der gasförmigen Medien dienenden, als Warmwasser-Heizkessel und/oder Dampferzeuger und/oder Lufterhitzer 18 und/oder Konverter 26 ausgebildeten Behälter 20 untergebracht und integriert sind, und die Brennstoffzelle 6 im Zentrum des Bereichs hoher Temperatur, umgeben von als Ringbrenner oder Ringbrennkammer ausgebildetem Brenner 7 und Nachbrenner 28 angeordnet ist.

Vorzugsweise ist die Vorrichtung derart konstruiert, dass die Randpartie 21 des das tragende Gehäuse darstellenden Behälters 20 als Vorwärmer 14;24 für den zuzuführenden Sauerstoffträgerstrom in Form eines Luftstroms oder als Wärmeaustauscher 18 in Form eines Wassermantels eines Heizkessels und/oder Warmwassererzeugers, und/oder als Dampfmantel eines Dampferzeugers und/oder Überhitzers, und/oder als direkter Lufterhitzer und/oder als Wärmeaustauscher für andere Medien oder teilweise als Vorwärmer 14 für den zuzuführenden Sauerstoffträgerstrom 12, teilweise als Wärmeaustauscher 18 in Form eines Wassermantels oder Dampfmantels und/oder Überhitzers oder Lufterhitzers ausgebildet ist, dergestalt, dass der Vorwärmerteil 22 für den Sauerstoffträgerstrom 12 örtlich oberhalb oder unterhalb des Wassermantelteils 23 oder innerhalb oder ausserhalb des Wassermantelteils 23 oder geometrisch in vertikaler oder horizontaler Richtung mit dem letzeren ineinandergeschachtelt, gegenseitig verwunden oder im Zickzack angeordnet ist, wobei thermodynamisch gesehen entweder mehrere in Serie oder parallel liegende Wärmeaustauscher 14;18;24 oder ein einziger Mehrfach-Wärmeaustauscher 14/18/24 vorgesehen sind, und dass das zur Verdichtung des Sauerstoffträgerstroms 12 benötigte Gebläse 9 direkt an den Behälter 20 angeflanscht und mit letzterem zu einer Betriebseinheit verbunden ist.

Vorteile der Erfindung

- Vollständige Entkoppelung der Umsetzung von chemischer Energie in Wärme und elektrische Energie, d.h. absolut freie Wahl der Leistungsverteilung nach örtlichem und zeitlichem Bedarf

- Einfache Leistungssteuerung
- Keine schädlichen Emissionen, kein Lärm
- Hoher Energienutzungsgrad auch bei kleinen Anlagen
- Geringe Verluste durch schädliche, die Umwelt belastende Abwärme
- Einfache Wartung
- Kompakte, raumsparende Bauweise

**Patentansprüche**

1. Verfahren zur Umwandlung von chemischer Energie eines flüssigen und/oder gasförmigen Brennstoffs in thermische Energie zwecks Wärmebereitstellung in Haushalt oder Industrie, zu chemischen und metallurgischen Umsetzungen aller Art mittels eines Brenners und gleichzeitig direkt in elektrische Energie mittels einer Brennstoffzelle, dergestalt, dass nur ein Teil der chemisch gebundenen Energie des Primärbrennstoffs in Wärme, der Rest jedoch gleichzeitig direkt in elektrische Energie umgesetzt wird, dadurch gekennzeichnet, dass der unter Überdruck angelieferte Primärbrennstoffstrom (1) in mindestens zwei parallel geschaltete Teilströme (2; 3) aufgeteilt wird, wobei mindestens je ein Teilstrom separat gesteuert/reguliert (4; 5) und der Brennstoffzelle (6) einerseits und dem Brenner (7) andererseits separat zugeführt wird, dergestalt, dass eine völlige Entkoppelung des elektrischen Energiestroms vom thermischen Energiestrom in einem beliebigen prozentualen Verhältnis nach Massgabe des jeweiligen örtlichen und zeitlichen Bedarfs bewerkstelligt wird, und dass der Strom (12) des die Brennstoffzelle (6) zu speisenden Sauerstoffträgers im Gegenstrom von den gemeinsamen Abgasen (25) der Brennstoffzelle (6) und des Brenners (7) vorgewärmt wird, dass ferner die thermische Energie der besagten Abgase durch weitestgehende Abgabe ihrer fühlbaren Wärme einerseits an den für den Brenner (7) bestimmten Teil des Primärbrennstoffs zu dessen Aufbereitung wie Verdampfung (27), Konvertierung (26) in geeignete Gase und Durchführung der Wassergasreaktion sowie andererseits hauptsächlich an einen gasförmigen oder flüssigen Wärmeträger (19) ausgenutzt wird, dass weiter ein Teil der latenten Wärme der Abgase durch Kondensation (24) mindestens eines Teils ihres Wasserdampfgehalts zu einer ersten Vorwärmung des Sauerstoffträgers (8) benutzt wird, und dass der Sauerstoffträgerstrom (8) wahlweise in steuerbare/regulierbare Teilströme (12; 13) aufgeteilt oder als Ganzes im Prozess geführt wird und dass aus thermodynamischen Gründen als Brennstoffzelle (6) eine keramische Hochtemperatur-Feststoffelektrolytzelle vorgesehen ist, die mindestens zu einem Teil durch direkte Wärmeübertragung von heissen Brennerabgasen (17) mittels Konvektion, Wärmeleitung und Strahlung aufgeheizt und auf der nötigen Betriebstemperatur gehalten wird.

2.  Verfahren nach Anspruch 1, dadurch gekennzeichnet, dass der Sauerstoffträgerstrom (8) zunächst vorverdichtet (9), in mindestens je einen Teilstrom (13) für den Brenner (7) und einen dazu parallel geschalteten Teilstrom (12) für die Brennstoffzelle (6) aufgeteilt und jeder Teilstrom (12; 13) separat gesteuert/reguliert (10; 11) wird, dergestalt, dass jedem zugeordneten Teilstrom (2; 3) des Primärbrennstoffs diejenige Sauerstoffmenge zugeführt wird, die für eine völlig unabhängige Umsetzung in elektrische und thermische Energie imSinne der Entkoppelung nach Massgabe des Bedarfs erforderlich ist.

3.  Verfahren nach Anspruch 1, dadurch gekennzeichnet, dass der für den Brenner (7) bestimmte Teil des Sauerstoffträgerstroms (8) ohne Vorverdichtung, unter Ausnutzung des natürlichen Saugzuges eines atmosphärischen Brenners (7) abgezweigt und lediglich der für die Brennstoffzelle (6) bestimmte Teil (12) vorverdichtet, separat gesteuert/reguliert (10) und der letzteren zugeführt wird.

4.  Verfahren nach Anspruch 1, dadurch gekennzeichnet, dass der Sauerstoffträgerstrom (8) als Ganzes zunächst verdichtet (9), gesteuert/reguliert (10), der Brennstoffzelle (6) zugeführt, dort entsprechend weiter erhitzt und als Reststrom in Form des Teilabgasstroms (15) der Sauerstoffelektroden-Kammer dem der Brennstoffzelle in Serie nachgeschalteten Brenner (7) zugeleitet wird.

5.  Verfahren nach Anspruch 1, dadurch gekennzeichnet, dass der der Brennstoffzelle (6) zugeführte Teilstrom (2) des Primärbrennstoffstroms (1) bezüglich Zusammensetzung und Menge durch das der Brennstoffzelle (6) vorgeschaltete Organ (4) dergestalt gesteuert/reguliert wird, dass nach Durchströmen der Brennstoffzelle (6) ein weiterhin oxydierbarer Bestandteil übrig bleibt und dass der entsprechende Teilabgasstrom (16) der Brennstoffelektroden-Kammer dem Brenner (7) als zusätzlicher Restbrennstoff zugeführt wird.

6.  Verfahren nach Anspruch 1, dadurch gekennzeichnet, dass zur Inbetriebsetzung der Brennstoffzelle (6) zunächst deren Teilstrom (2) des Primärbrennstoffs vollständig abgeschaltet (4) wird und die Brennstoffzelle (6) unter Vermeidung der Zuführung elektrischer Energie lediglich zu einem Teil durch direkte Wärmeübertragung von heissen Brennerabgasen (17) mittels Konvektion, Wärmeleitung und Strahlung, zum anderen Teil durch ihren von den Brennerabgasen (17) mittelbar aufgeheizten Teilstrom (12) des Sauerstoffträgers auf Betriebstemperatur gebracht wird.

7.  Vorrichtung zur Durchführung des Verfahrens zur Umwandlung von chemischer Energie eines flüssigen und/oder gasförmigen Brennstoffs in thermische Energie und geichzeitig direkt in elektrische Energie gemäss Anspruch 1, wobei ein Brenner (7) und ein Nachbrenner (28) zur Umsetzung in Wärme, eine Brennstoffzelle (6) zur Umsetzung in elektrische Energie, eine Einrichtung (18) zur Übertragung und Ausnutzung des thermischen Energieanteils in Form eines Heizkessels oder Dampferzeugers und mindestens ein Wärmeaustauscher zur Rückführung und Ausnutzung mindestens eines Teils der Wärme im Kreislauf vorgesehen ist, dadurch gekennzeichnet, dass sowohl der (die) Brenner (7) als auch die Brennstoffzelle(n) (6) und ferner sämtliche irgend einer Wärmeübertragung innerhalb des Kreislaufs dienenen Wärmeaustauscher (18; 24), Vorwärmer (14), Brennstoffverdampfer (27) und Konverter (26) örtlich/geometrisch vollständig in einem nach aussen thermisch isolierten, vollständig abgeschlossenen, der Führung der gasförmigen Medien dienenden, als Warmwasser-Heizkessel und/oder Dampferzeuger und/oder Lufterhitzer (18) und/oder Konverter (26) ausgebildeten Behälter (20) untergebracht und integriert sind, wobei die Brennstoffzelle (6) im Zentrum des Bereichs hoher Temperatur, umgeben von als Ringbrenner oder Ringbrennkammer ausgebildetem Brenner (7) und Nachbrenner (28) angeordnet ist.

8.  Vorrichtung nach Anspruch 7, dadurch gekennzeichnet, dass die Randpartie (21) des das tragende Gehäuse darstellenden Behälters (20) als Vorwärmer (14; 24) für den zuzuführenden Sauerstoffträgerstrom in Form eines Luftstroms ausgebildet ist und dass das zur Verdichtung des Sauerstoffträgerstroms (12) benötigte Gebläse (9) direkt an den Behälter (20) angeflanscht und mit letzterem zu einer Betriebseinheit verbunden ist.

9.  Vorrichtung nach Anspruch 7, dadurch gekennzeichnet, dass die Randpartie (21) des das tragende Gehäuse darstellenden Behälter (20) als Wärmeaustauscher (18) in Form eines Wassermantels eines Heizkessels und/oder Warmwassererzeugers, und/oder als Dampfmantel eines Dampferzeugers und/oder Überhitzers, und/oder als direkter Lufterhitzer und/oder als Wärmeaustauscher für andere Medien ausgebildet ist.

10. Vorrichtung nach Anspruch 7, dadurch gekennzeichnet, dass die Randpartie (21) des das tragende Gehäuse darstellenden Behälters (20) teilweise als Vorwärmer (14) für den zuzuführenden Sauerstoffträgerstrom (12), teilweise als Wärmeaustauscher (18) in Form eines Wassermantels oder Dampfmantels und/oder Überhitzers oder Lufterhitzers ausgebildet ist, dergestalt, dass der Vorwärmerteil (22) für den Sauerstoffträgerstrom (12) örtlich oberhalb oder unterhalb des Wassermantelteils (23) oder innerhalb oder ausserhalb des Wassermantelteils (23) oder geometrisch in vertikaler oder horizontaler Richtung mit dem letzeren ineinandergeschachtelt, gegenseitig verwunden oder im Zickzack angeordnet ist, wobei thermodynamisch gesehen entweder mehrere in Serie oder parallel liegende Wärmeaustauscher (14; 18; 24) oder ein einziger Mehrfach-Wärmeaustauscher (14/18/24) vorgesehen sind.

## Claims

1. A process for the conversion of chemical energy of a liquid and/or gaseous fuel into heat energy for the purposes of applying heat in households or industry, for chemical and metallurgical reactions of all kinds by means of a burner and at the same time directly into electrical energy by means of a fuel cell, in such a way that only a part of the chemically bound energy of the primary fuel is converted into heat but the remainder is at the same time directly converted into electrical energy, characterised in that the primary fuel flow (1) which is delivered under an increased pressure is divided into at least two partial flows (2; 3) which are disposed in parallel, wherein at least one respective partial flow is separately controlled/regulated (4; 5) and fed separately to the fuel cell (6) on the one hand and the burner (7) on the other hand in such a way as to provide for complete decoupling of the electrical energy flow from the heat energy flow in any percentage relationship in accordance with the respective requirement in terms of location and time, and that the flow (12) of the oxygen carrier for feeding the fuel cell (6) is preheated in counter-flow relationship by the common exhaust gases (25) of the fuel cell (6) and the burner (7), that in addition the heat energy of said exhaust gases is utilised by very substantially giving off their sensible heat on the one hand to the part of the primary fuel intended for the burner (7), for preparation thereof such as vaporisation (27), conversion (26) into suitable gases and execution of the water gas reaction, and on the other hand primarily to a gaseous or liquid heat carrier (19), that further a part of the latent heat of the exhaust gases is used by condensation (24) of at least a part of their water vapour content for a first preheating of the oxygen carrier (8), and that the oxygen carrier flow (8) is selectively divided into controllable/regulatable partial flows (12; 13) or is passed as a whole in the process, and that for thermodynamic reasons the fuel cell (6) used is a ceramic high-temperature solid-electrolyte cell which is at least in respect of a part heated and maintained at the necessary operating temperature by direct heat transfer from hot burner exhaust gases (17) by means of convection, heat conduction and radiation.

2. A process according to claim 1 characterised in that the oxygen carrier flow (8) is firstly pre-compressad (9), divided into at least one respective partial flow (13) for the burner (7) and a partial flow (12) which is in parallel therewith for the fuel cell (6) and each partial flow (12; 13) is separately controlled/regulated (10; 11) in such a way that the amount of oxygen fed to each associated partial flow (2; 3) of the primary fuel is that which is required for completely independent conversion into electrical and heat energy in accordance with the decoupling according to the need involved.

3. A process according to claim 1 characterised in that the part of the oxygen carrier flow (8) which is intended for the burner (7) is branched off without pre-compressing, utilising the natural suction draft of an atmospheric burner (7), and only the part (12) which is intended for the fuel cell (6) is pre-compressed, separately controlled/regulated (10) and fed to the latter.

4. A process according to claim 1 characterised in that the oxygen carrier flow (8) is firstly as a whole compressed (9), controlled/regulated (10), fed to the fuel cell (6), there suitably further heated and passed as a residual flow in the form of the partial exhaust gas flow (15) of the oxygen electrode chamber to the burner (7) which is connected in series downstream of the fuel cell.

5. A process according to claim 1 characterised in that the partial flow (2) of the primary fuel flow (1), which is fed to the fuel cell (6), is controlled/regulated in respect of composition and amount by the member (4) disposed upstream of the fuel cell (6), in such a way that, after flowing through the fuel cell (6), a component which can still be oxidised remains, and that the corresponding partial exhaust gas flow (16) of the fuel electrode chamber is fed to the burner (7) as an additional residual fuel.

6. A process according to claim 1 characterised in that to start the fuel cell (6) operating firstly its partial flow (2) of the primary fuel is completely switched off (4) and the fuel cell (6), while avoiding the supply of electrical energy, is brought up to operating temperature only in respect of a part by direct heat transfer from hot burner exhaust gases (17) by means of convection, heat conduction and radiation, and in respect of the other part by its partial flow (12) of the oxygen carrier, which is indirectly heated up by the burner exhaust gases (17).

7. Apparatus for carrying out the process for the conversion of chemical energy of a liquid and/or solid fuel into thermal energy and at the same time directly into electrical energy according to claim 1 wherein there are provided a burner (7) and a post-burner (28) for conversion into heat, a fuel cell (6) for conversion into electrical energy, a device (18) for transfer and utilisation of the heat energy component in the form of a heating boiler or steam generator and at least one heat exchanger for recycling and utilising at least a part of the heat in the circuit, characterised in that both the burner or burners (7) and also the fuel cell or cells (6) and also all of the heat exchanger (18; 24), preheater (14), fuel vaporiser (27) and converter (26), which serve for any heat transfer within the circuit, are locally/geometrically disposed and integrated completely in an outwardly heat-insulated, completely closed-off containment vessel (20) which serves to guide the gaseous agents and which is in the form of a hot water heating boiler and/or steam generator and/or air heater (18) and/or converter (26), wherein the fuel cell (6) is arranged in the centre of the high-temperature region, surrounded by the burner (7) and the post-burner (28), in the form of a ring burner or ring combustion chamber.

8. Apparatus according to claim 7 characterised in that the edge portion (21) of the containment vessel (20) representing the supporting housing is in the form of a preheater (14; 24) for the oxygen carrier flow to be fed, in the form of an air flow, and that the fan (9) which is required for compressing the oxygen carrier flow (12) is flange-mounted directly to the containment vessel (20) and is connected thereto to form an operating unit.

9. Apparatus according to claim 7 characterised in that the edge portion (21) of the containment vessel (20) representing the supporting housing is formed as a heat exchanger (18) in the form of a water jacket of a heating boiler and/or hot water producer and/or as a steam jacket of a steam generator and/or superheater, and/or as a direct air heater and/or as a heat exchanger for other agents.

10. Apparatus according to claim 7 characterised in that the edge portion (21) of the containment vessel (20) representing the supporting housing is partially fcrmed as a preheater (14) for the oxygen carrier flow (12) to be fed and partially as a heat exchanger (18) in the form of a water jacket or steam jacket and/or superheater or air heater, in such a way that the preheater portion (22) for the oxygen carrier flow (12) is arranged locally above or below the water jacket portion (23) or inside or outside the water jacket portion (23) or geometrically in a vertical or horizontal direction in an interleaved, intertwined or zig-zag relationship with the water jacket portion (23), wherein considered thermodynamically there are provided either a plurality of heat exchangers (14; 18; 24) disposed in series or parallel or a single multiple-heat exchanger (14/18/24).

## Revendications

1. Procédé pour la transformation de l'énergie chimique d'un combustible liquide et/ou gazeux en énergie thermique aux fins de mise à disposition de la chaleur en utilisation domestique ou industrielle, pour les réactions chimiques et métallurgiques de toute nature au moyen d'un brûleur et simultanément directement en énergie électrique au moyen d'une pile à combustible de telle sorte que seule une partie de l'énergie liée chimiquement du combustible primaire est transformée en chaleur, le reste étant toutefois transformé simultanément en énergie électrique, procédé caractérisé en ce que le courant de combustible primaire (1) amené en surpression est divisé en au moins deux courants partiels (2; 3) disposés en parallèle, de sorte qu'au moins chaque fois un courant partiel est commandé/régulé séparément (4; 5) et amené séparément à la pile à combustible (6) d'une part et au brûleur (7) d'autre part séparément de façon à réaliser un découplage complet du courant d'énergie électrique à partir du courant d'énergie thermique dans un quelconque rapport en pourcentage en fonction des besoins respectifs localement et temporellement et en ce que le courant (12) du support d'oxygène alimentant la pile à combustible (6) est préchauffé dans le contre-courant des gaz d'échappement communs (25) de la pile à combustion (6) et du brûleur (7), en ce que de plus l'énergie thermique desdits gaz d'échappement est utilisée par transfert poussé de sa chaleur sensible d'une part à la partie du combustible primaire destinée au brûleur (7) pour sa préparation par exemple l'évaporation (27), la conversion (26) en gaz appropriés et exécution de la réaction du gaz à l'eau ainsi que d'autre part principalement à un support thermique (19) gazeux ou liquide, en ce que par ailleurs une partie de la chaleur latente des gaz d'échappement est utilisée par condensation (24) au moins d'une partie de sa teneur en vapeur d'eau pour un premier préchauffage du porteur d'oxygène (8), en ce que le courant porteur d'oxygène (8) est divisé sélectivement en courants partiels (12 ; 13) commandables, régulables ou amenés globalement dans le procédé et en ce que pour des raisons thermodynamiques, il est prévu en tant que pile à combustible (6), une cellule d'électrolyte solide-haute température en céramique qui est réchauffée au moins en partie par transfert thermique direct des gaz d'échappement brûlants du brûleur (17) par convection, conduction thermique et rayonnement et maintenue à la température de service nécessaire.

2. Procédé selon la revendication 1, caractérisé en ce que le courant porteur d'oxygène (8) dans un premier temps précompressé (9) est divisé dans au moins chaque fois un courant partiel (13) pour le brûleur (7) et un courant partiel (12) parallèle au premier pour la pile à combustible (6) et chaque courant partiel (12 ; 13) est commandé, régulé séparément (10 ; 11) de telle manière qu'à chaque courant partiel affecté (2, 3) du combustible primaire est amenée la quantité d'oxygène qui est nécessaire pour une conversion totalement indépendante en énergie électrique et thermique au sens du découplage en fonction des besoins.

3. Procédé selon la revendication 1, caractérisé en ce que la partie du courant porteur d'oxygène (8) destinée au brûleur (7) est prélevée sans utilisation du tirage par aspiration naturelle d'un brûleur atmosphérique (7) et seule la partie (12) destinée à la pile à combustible (6) est précomprimée, commandée/régulée séparément (10) et amenée à la pile.

4. Procédé selon la revendication 1, caractérisé en ce que le courant porteur d'oxygène (8) est d'abord globalement comprimé (9), commandé et régulé (10) et amené à la pile à combustible (6) où il est encore réchauffé et amené comme courant résiduel sous forme de courant de gaz d'échappement partiel (15) de la chambre-électrodes oxygène au brûleur (7) montée en série en disposée en amont de la pile à combustible.

5. Procédé selon la revendication 1, caractérisé en ce que le courant partiel (2) du courant de combustible primaire (1) amené à la pile à combustible (6) est commandé et régulé en ce qui concerne la composition et la quantité par un dispositif (4) monté en amont de la pile à combustible (6), en ce qu'après le passage dans la pile à combustible (6), il reste un composant encore oxydable et en ce que le courant des gaz d'échappement partiel correspondant (16) de la chambre d'électrodes combustibles est amené au brûleur (7) en tant que combustible résiduel supplémentaire.

6. Procédé selon la revendication 1, caractérisé en ce que pour la mise en service de la pile à combustible (6), le courant partiel (2) du combustible primaire est totalement arrêté (4) et la pile à combustible (6) en évitant l'amenée d'énergie électrique uniquement sur une partie par transfert thermique des gaz d'échappement brûlants du brûleur (17) par convection, conduction thermique et rayonnement, et d'autre part par leur courant partiel (12) réchauffé directement par les gaz d'échappement de brûleur (17) du support d'oxygène, est amenée à la température de service.

7. Dispositif pour la réalisation du procédé pour la transformation de l'énergie chimique d'un combustible liquide et/ou solide en énergie thermique et simultanément directement en énergie électrique selon la revendication 1, un brûleur (7) et un post-brûleur (28) pour la conversion en chaleur, une pile à combustion (6) pour la transformation en énergie électrique, un dispositif (18) pour la transmission et l'utilisation de la partie d'énergie thermique sous forme d'une chaudière ou d'un générateur de vapeur et au moins un échangeur de chaleur pour le recyclage et l'utilisation d'au moins une partie de la chaleur dans le circuit étant prévus, et caractérisé en ce qu'aussi bien le ou les brûleur(s) (7) que la ou les pile(s) à combustible (6) et de plus tous les échangeurs de chaleur (18 ; 24) servant à la transmission de chaleur à l'intérieur du circuit (18 ; 24), préchauffeur (14), évaporateur de combustible (27) et convertisseur (26) sont intégrés et disposés localement/géométriquement complètement dans un récipient (20) isolé thermiquement vers l'extérieur, complètement fermé, servant au guidage des milieux gazeux, en tant que chaudière à eau chaude et/ou générateur de vapeur et/ou réchauffeur d'air (18) et/ou convertisseur (26), de sorte que la pile à combustible (6) est disposée au centre de la zone à température élevée, entourée du brûleur (7) conçu sous forme de brûleur circulaire ou de chambre de combustion circulaire et du post-brûleur (28).

8. Dispositif selon la revendication 7, caractérisé en ce que la partie marginale (21) du réservoir (20) constituant le logement porteur est conçue comme préchauffeur (14 ; 24) pour le courant porteur d'oxygène à amener sous forme de courant d'air et en ce que la soufflante (9) nécessaire pour la compression du courant porteur d'oxygène (12) est bridée directement sur le récipient (20) et raccordée avec ce dernier pour former une unité de fonctionnement.

9. Dispositif selon la revendication 7, caractérisé en ce que la partie marginale (21) du réservoir (20) représentant le logement porteur est conçue en tant qu'échangeur de chaleur (18) sous forme d'une enveloppe d'eau d'une chaudière et/ou d'un générateur d'eau chaude et/ou d'une enveloppe de vapeur d'un générateur de vapeur et/ou d'un surchauffeur et/ou d'un réchauffeur d'air direct et/ou d'un échangeur de chaleur pour d'autres milieux.

10. Dispositif selon la revendication 7, caractérisé en ce que la partie marginale (21) du récipient (20) constituant le logement porteur est partiellement conçue en tant qu'échangeur de chaleur (18) sous forme d'une enveloppe d'eau ou d'une enveloppe de vapeur et/ou d'un surchauffeur ou d'un réchauffeur d'air de telle manière que la partie de préchauffeur (22) pour le courant porteur d'oxygène (12) s'emboîte localement au-dessus ou au-dessous de la partie d'enveloppe d'eau (23) ou à l'intérieur ou à l'extérieur de la partie d'enveloppe d'eau (23) ou géométriquement dans la direction verticale ou horizontale avec cette dernière, et est disposée en zigzag ou en formant des méandres, de sorte que du point de vue thermodynamique sont prévus plusieurs échangeurs de chaleur (14; 18; 24) montés en série ou en parallèle ou un seul échangeur de chaleur multiple (14/18/ 24).

**Fig. 1**

**Fig. 2**

## Fig. 3

CO, H2

16 — H2O, CO2
17 — H2O, CO2

7

5
3
2
1 — CnHm
4

13' — O2+4N2

8 — O2+4N2

12    10    9

28
H2O, CO2 — 25
26
H2O

6

14
27

18
H2O
O2+4N2 — 19

24
CO2
N2 — 25

H2O

## Fig. 4

CO, H2

15 — O2, N2
16 — H2O, CO2
17 — H2O, CO2

7

5
3
2
1 — CnHm
4

8 — O2+4N2

12    10    9

28
H2O, CO2 — 25
26
H2O

6

14
27

18
H2O
O2+4N2 — 19

24
CO2
N2 — 25

H2O

## Fig. 5

## Fig. 6

EP 0 636 280 B1

## Fig. 7

## Fig. 8

18